# EUROPEAN PATENT APPLICATION

(11) **EP 1 559 315 A1**
(43) Date of publication of application: **03.08.2005**
(21) Application number: 04250469.6
(22) Date of filing: 28.01.2004
(51) Int. Cl.: A01K 1/015, B01J 20/28

(54) **Sorbent additive and composition**

(71) Applicant: Marshall, Stephen, Tallahassee, FL 32311 (US)
(72) Inventor: Marshall, Stephen, Tallahassee, FL 32311 (US)
(74) Representative: JENSEN & SON

(57) **Abstract**

An additive formulated for blending with conventional absorbent materials to produce agglomerization upon the introduction of moisture. The invention also comprises mixtures of the additive with the conventional absorbent materials. The additive itself comprises: a polysaccharide, such as a galactomannan gum; a borate compound for use as a cross-linking agent; a dicarboxylic acid in order to acidify the pH of the composition; and preferably a flow control element such as silica. A dust control element may also be added to control dust during the mixing process.

## Description

This invention relates to the field of sorbent compositions. More specifically, the invention comprises an additive which can be mixed with conventional sorbent materials to provide agglomeration upon contact with liquids, such as animal urine. The invention also comprises mixtures of the additive with conventional sorbent materials.

### 2. Description of the Related Art.

Sorbent compositions for control of animal waste have long been known in the art. These have typically used particulated clays to absorb liquids. In recent years, cross-linking formulations which cause the agglomeration of the particles upon contact with liquids have been developed. One such formulation is disclosed in U.S. Patent No. 5,762,023 to Carter (1998), which patent is incorporated herein by reference.

The prior art formulations typically produce clumps within the particulated sorbent composition, thereby allowing the user to remove only the contaminated portion of the litter. The adhesive strength and durability of these clumps are important to the success of a litter product. Obviously, the cost of the formulation used is also important to the commercial success of the product.

### BRIEF SUMMARY OF THE INVENTION

The present invention comprises an additive formulated for blending with conventional absorbent materials to produce agglomerization upon the introduction of moisture. The invention also comprises mixtures ofthe additive with the conventional absorbent materials. The additive itself comprises: a polysaccharide, such as a galactomannan gum; a borate compound for use as a cross-linking agent; a dicarboxylic acid in order to acidify the pH ofthe composition; and preferably a flow control element such as silica. A dust control element may also be added to benefit the consumer during pouring and use of the absorbent material.

### DETAILED DESCRIPTION OF THE INVENTION

Animal litter products use a high percentage of conventional absorbent materials for purposes ofwater/urine absorbtion. Examples ofthese materials are various particulated clays, cellulose fiber, cellulose fluff, peat moss, paper, wood fluffs, and mixtures thereof. These materials are present simply to absorb moisture and act as a "litter substrate" for other materials providing more sophisticated features. In a sorbent composition such as the present invention, these conventional absorbent materials typically comprise 95 to 99.8% of the composition by weight.

The conventional absorbent materials are bulky and heavy, meaning that transportation and storage present substantial economic concerns. It is often desirable to create litter compositions near the anticipated markets, so that transportatin costs do not destroy the economic viabiity ofthe prouct.

The remaining materials in the composition - typically comprising only 0.2% to 5% by weight - are more easily transported to litter manufacturing sites around the world. These remaining materials can be described as an "additive," since they are blended into the bulky conventional absorbent materials during the final stages of the manufacturing process. Such additives can be formulated for combining with specific conventional absorbent materials, or with a group of conventional absorbent materials. Thus, the additives - which have specific and well-controlled chemical compositions - can be manufactured in a relatively sophisticated plant, then shipped to the site of manufacturing for the final litter product and blended into the conventional absorbent materials.

A suitable additive for addition to a clumpable litter comprises a polysaccharide, a boron based cross-linking agent, and a dicarboxylic acid to acidify the composition and cause the constituents to clump faster. A dry flow aid may also be desirable. As mentioned above, the additive is intended to be mixed into a much larger amount of conventional absorbent materials. Depending upon the attrition tendencies and receptive nature of the substrate, it may also be desirable to add a dust control agent.

One particularly suitable polysaccharide is a galactomannan gum. Such gums include guar gum, derivatised guar gum, xanthum gum, and locust bean gum, with guar gum being the preferred choice. The guar gum used can include ordinary guar gum, hydroxypropyl guar, hydroxyethyl guar, carboxymethyl guar, carboxymethyl hydroxypropyl guar, guar hydroxypropyltrimonium chloride, and mixtures thereof. Another possible polysaccharide is sodium alginate.

The boron-based clumping agent is selected from the group including borates, metaborates, . and perborates. Anhydrous borax, *Na*₂*B*₄*O*₇ (having the IUPAC name "sodium *tetra*borate"), is particularly effective. Other possibilities include sodium *meta*borate, *NaBO*₂ ; sodium *meta*borate, tetrahydrate, *NaBO*₂,4*H*₂*O*; sodium perborate, *NaBO*₂,*H*₂*O*₂,3*H*₂*O* (having the IUPAC name "sodium*meta*borate, peroxyhydrate"); borax, *Na*₂*B*₄*O*₇,10*H*₂*O* (having the IUPAC name "sodium *tetra*borate, decahydrate); and sodium *tetra*borate, pentahydrate, *Na*₂*B*₄*O*₇,5*H*₂*O*

Various dicarboxylic acids can be used to acidify the composition. Adjusting the pH of the composition is important in the promotion ofthe cross-linking needed for agglomerazation. Suitable dicarboxyulic acids include (IUPAC names are shown in parentheses or, where no common name is used, presented as the primary name): oxalic acid (ethanedioic acid), succinic acid (butanedioic acid), adipic acid (hexanedioic acid), pimelic acid (heptanedioic acid), suberic acid (octanedioic acid), azelaic acid (nonanedioic acid), sebacic acid (decanedioic acid), fumaric acid (*trans*-butenedioic acid), phthalic acid (1,2-benzenedicarboxylic acid), malonic acid (propanedioic acid), glutaric acid (pentanedioic acid), maleic acid (*cis*-butanedioic acid), undecyclic acid (undecanoic acid), lauric acid (dodecanoic acid), myristic acid (tetradecanoic acid), pentadecyclic acid (pentadecanoic acid), and tridecanoic acid.

While many such dicarboxylic acids could work in the proposed formulation, commercial availability and cost are obviously important considerations. The butene-derived dicarboxylic acids have been found particularly effective (fumaric acid (*trans*-butenedioic acid) and maleic acid (*cis*-butenedioic acid)). The low water solubility of these two acids is believed to promote enhanced clumping performance when cat urine is added to the composition.

The dry flow aid employed is preferably silica, with precipitated silica or fumed silica being appropriate choices. The dust control agent employed is preferably polytetrafluoroethylene (PTFE). A water dispersable non-ionic vinyl polymer can also be used.

A typical manufacturing process for the additive is vigorous blending of the polysaccharide, the boron-based clumping agent, the dicarboxylic acid, and the dry flow aid. The order of mixing is unimportant, so long as vigorous blending or possibly milling is used. Some boron-based clumping agents have a tendency to pick up moisture and form small clumps when they come in contact with the polysaccharide. Thus, it is best to process the mixture so that these clumps are ground back into an evenly dispersed particulate. One approach is to blend the polysaccharide, dicarboxylic acid, and dry flow aid together thoroughly before adding the boron-based clumping agent. In this way, the other ingredients, particularly the dry flow agent, help dry out the polysaccharide before the addition of the boron-based clumping agent.

Once the additive is manufactured, it can be stored for subsequent blending into a much larger quantity of conventional absorbent materials. When the conventional absorbent material is a clay product (a common choice), dust control becomes an important consideration. A good approach to dust control is to spray the conventional absorbent material with an aqueous suspension of PTFE at the rate of 1 to 2 pounds of PTFE per ton of conventional absorbent material. The amount of water used should obviously be minimized, with 10 to 20 pounds of water per ton of conventional absorbent material generally being adequate.

Once the dust control component has been added, the additive can be mechanically blended into the conventional absorbent material in order to make a finished litter product. A simple screw auger or screw conveyor can be used to accomplish this task. The powder additive is typically blended at the rate of between 0.2% and 3% by weight into the conventional absorbent material (4-60 pounds of additive per ton of conventional absorbent material).

Other prior art blending methods, such as ribbon blending or cut and fold plowing, can be used. The objective is to get a thorough mixing of the powder additive with the conventional absorbent material ("litter substrate"), without breaking up the litter too much and forming unwanted dust. The preferred approach would be a continuous flow device although a batch system could also be used.

### EXAMPLE ONE

A formula for the additive:

| Ingredient | % by weight |
|---|---|
| Guar gum | 72 |
| Anhydrous borax | 12 |
| Fumaric acid | 15 |
| Precipitated or fumed silica | 1 |

A separate aqueous suspension of PTFE is applied to the conventional absorbent material (for dust control) at the rate of 1-2 pounds of PTFE per ton of litter substrate. This formulation is particularly effective for use with a particulated clay litter substrate, such as Porter's Creek calcium montmorillonite, Georgia attapulgite, opaline silica from the Monterrey formation of California, Spanish sepiolite from Tolsa in Spain, clays from the United Kingdom, and clays from South Africa.

Particle size plays a role in keeping the additive well blended and in clump formation. The litter substrate should have particles in the range of 8 to 50 mesh. A 12 or 14 by 40 mesh is suitable. Allowing a particle size down to 50 mesh helps keep the powder additive normally distributed within the litter substrate. However, if the particles are too small, thin and flat surface clumps result. These are deemed undesirable due to a tendency to break during transportation and a reduction in the clay's ability to absorb odors.

The selection of a dicarboxylic acid having a low solubility in water is believed to be important. The use of such an acid allows the urine to penetrate more deeply into the litter substrate before forming a harder "puck" shaped clump that is easily removed and transported.

### EXAMPLE TWO

The specific composition of the ingredients in the additive can vary within a fairly large range. In general, the polysaccharide should be 70% to 80% of the total weight of the additive, and should be 5 to 6 times the amount of the boron based clumping agent. The dicarboxylic acid should be at least 10% of the total weight of the additive, but need not exceed 20%. Accordingly, the following formulation is effective:

| Ingredient | % by weight |
|---|---|
| Guar gum | 70-80 |
| Anhydrous borax | 10-17 |
| Fumaric acid | 10-20 |
| Precipitated or fumed silica | 1 |

### EXAMPLE THREE

As discussed previously, the additive is intended to be mixed into a conventional absorbent material. In this example, the additive of EXAMPLE ONE is blended with Georgia attapulgite clay in the ratio of 2% by weight of additive to the clay. A control sample was also prepared excluding the Fumaric acid.

Cat urine was applied to both formulations. Two tests were then performed on the resulting clump - a clump strength test and a drop test. The clump strength test used a Chatillion gage to measure the amount of force required to break the clump (via shearing action). A higher strength is desirable.

The drop test is simply an inspection of a clump dropped onto a surface under controlled circumstance. The clump is dropped onto a 3/4 inch test sieve from a height of 10 inches. The largest remaining piece is then weighed and compared against the initial weight to determine a percentage of retained weight. A higher retained weight is desirable. Both tests were performed at one hour after the urine was added and 24 hours after the urine was added. The results of these tests were as follows:

| | No Acid | | With Fumaric Acid | |
|---|---|---|---|---|
| | 1 hr | 24hr | 1hr | 24hr |
| Clump Strength (psi) | 0.47 | 5.32 | 0.64 | 10.4 |

The addition of the fumaric acid (dicarboxylic acid) to shift the pH of the composition was obviously significant.

### EXAMPLE FOUR

A similar control study was performed using the additive of EXAMPLE ONE and Spanish Sepiolite clay from Tolsa (Sepiolite clays, which do not naturally form lumps, are known to be more absorbent by weight than sodium bentonite clays - although sodium bentonite clays provide more natural clumping). Shorter time measurements were taken in order to quantify the suspected faster clumping. The results ofthese tests (conducted at 3% by weight additive to litter substrate) were as follows:

| | No Acid | | | | With Fumaric Acid | | | |
|---|---|---|---|---|---|---|---|---|
| | 15 min | 1 hr | 2 hr | 24hr | 15 min | 1 hr | 2 hr | 24hr |
| Clump Strength (psi) | 0.21 | 0.41 | 0.75 | 6.18 | 0.42 | 0.75 | 1.02 | 12.00 |

The addition of fumaric acid (a dicarboxylic acid) significantly improves the clumpability of this material, thus providing clumping performance closer to a sodium bentonite clay while providing the greater absorbency per pound of a Sepiolite clay.

### EXAMPLE FIVE

With the advantage ofthe fumaric acid being apparent, additional clay samples were evaluated using the additive with fumaric acid. The additive of EXAMPLE ONE was mixed with Porter's Creek Calcium at the rate of 3% additive to litter substrate by weight. The results were as follows:

| | With Fumaric Acid | | | |
|---|---|---|---|---|
| | 15 min | 1 hr | 2 hr | 24hr |
| Clump Strength (psi) | 0.37 | 0.36 | 3.88 | 8.53 |

The additive of EXAMPLE ONE was mixed with clay from the United Kingdom at the rate of 3% additive to litter substrate by weight. The results were as follows:

| | With Fumaric Acid | |
|---|---|---|
| | 1 hr. | 24hr |
| Clump Strength (psi) | 0.54 | 4.31 |

### EXAMPLE SEVEN

The additive formula disclosed in U.S. Patent No. 5,762,023 to Carter (1998) has found considerable commercial application. It was therefore desired to compare the present invention to this prior art formulation. Accordingly, the additive of EXAMPLE ONE was blended with a clay substrate (California Monterrey Shale) at the ratio of 2% by weight and 3% by weight. Likewise, the additive of the Carter Patent was added to the same substrate at the ratio of 2% by weight and 3% by weight. The clump strength (in psi) of the different formulations were then tested. The results were as follows:

| Time | EX 1 (2%) | EX1 (3%) | Carter (2%) | Carter (3%) |
|---|---|---|---|---|
| 15 min | 0.67 | 0.65 | 0.51 | 0.48 |
| 1 hr | 1.11 | 1.60 | 0.70 | 0.54 |
| 24 hr | 10.7 | 9.38 | 8.65 | 8.85 |

The fact that lowering the amount of additive actually improved the performance is not necessarily true for different litter substrates. It was true, however, for this particular California Monterrey Shale.

The preceding description contains significant detail regarding the novel aspects of the present invention. It is should not be construed, however, as limiting the scope of the invention but rather as providing illustrations of the preferred embodiments of the invention. Thus, the scope of the invention should be fixed by the following claims, rather than by the examples given.

## Claims

1. An additive to promote clumping in absorbent compositions **characterised by**:
a. a galactomannan gum;
b. a borate compound; and
c. a dicarboxylic acid.

2. An additive according to claim 1 comprising:
a. from 70% to 80% by weight of guar gum;
b. from 10% to 17% by weight of anhydrous borax; and
c. from 10% to 20% by weight of fumaric acid.

3. An additive as recited in claim 1 or 2, further comprising a silica.

4. An additive according to claim 1, 2 or 3, wherein said galactomannan gum is selected from the group consisting of guar gum, derivatised guar gum, xanthum gum, locust beam gum, sodium alginate.

5. An additive according to claim 1, 2 or 3, wherein said galactomannan gum is selected from the group consisting of natural guar, hydroxypropyl guar, hydroxyethyl guar, carboxymethyl guar, carboxymethyl hydroxypropyl guar, guar hydroxypropyltrimonium chloride, and mixtures thereof.

6. An additive according to any one of claims 1 to 5, wherein said borate compound is selected from the group consisting of borates, metaborates and perborates.

7. An additive according to any one of claims 1 to 5, wherein said borate compound is anhydrous borax.

8. An additive according to any one of claims 1 to 5, wherein said borate compound is selected from the group consisting of sodium metaborate; sodium metaborate, tetrahydrate; sodium metaborate, peroxyhydrate; sodium tetraborate; sodium tetraborate, decahydrate; sodium tetraborate, pentahydrate, and mixtures thereof.

9. An additive according to any one of claims 1 to 8, wherein said dicarboxylic acid is selected from the group consisting of oxalic acid, succinic acid, adipic acid, pimelic acid, suberic acid, azelaic acid, sebacic acid, fumaric acid, phthalic acid, malonic acid, glutaric acid, maleic acid, undecyclic acid, lauric acid, myristic acid, pentadecyclic acid, tridecanoic acid, and mixtures thereof.

10. An additive according to claim 2 or any one of claims 3 to 9 when dependent thereon, wherein said silica is selected from the group consisting of precipitated silica and fumed silica.

11. A composition of matter wherein the additive according to any one of claims 1 to 10 is mixed with a conventional absorbent material.

12. A composition of matter wherein the additive according to any one of claims 1 to 10 is mixed with a conventional absorbent material and a dust control component.

13. A composition of matter according to claim 11 or 12, wherein the additive is mixed with a conventional absorbent material in the ratio of between 0.2% and 3% by weight of additive to conventional absorbent material.

14. A composition according to claim 12, wherein said dust control component comprises polytetrafluoroethylene.

15. A composition according to claims 11 to 14, wherein said conventional absorbent material comprises one or more of the following: particulated clay, cellulose fiber, cellulose fluff, peat moss, paper, wood fluffs and mixtures thereof.
